# EUROPÄISCHE PATENTSCHRIFT

(11) **EP 2 722 701 B1**
(45) Veröffentlichungstag und Bekanntmachung des Hinweises auf die Patenterteilung: **13.03.2019**
(21) Anmeldenummer: 12189331.7
(22) Anmeldetag: 19.10.2012
(51) Int. Cl.: G02B 7/00, G02B 7/02

(54) **Optisches system für einen sensor**
Optical system for a sensor
Système optique pour un capteur

(43) Veröffentlichungstag der Anmeldung: 23.04.2014
(73) Patentinhaber: Baumer Electric AG, 8501 Frauenfeld (CH)
(72) Erfinder: Preuss, Volker, 78464 Konstanz (DE); Röhm, Thomas, 78467 Konstanz (DE); Bauer, Nils, 8200 Schaffhausen (CH)
(74) Vertreter: Strauss, Steffen

(56) Entgegenhaltungen:
- EP-A1- 2 372 426
- WO-A1-2005/031423
- JP-A- 2004 206 000
- JP-A- 2005 227 620
- US-A1- 2006 077 575
- US-A1- 2007 177 842

## Beschreibung

Die Erfindung betrifft ein optisches System für einen Sensor, umfassend einen Linsenhalter und eine Linse. Des Weiteren betrifft die Erfindung einen Sensor mit einem optischen System. Ferner betrifft die Erfindung ein Verfahren zur Fixierung einer Linse an einem Linsenhalter in einem optischen System für einen Sensor.

Optische Systeme für einen Sensor umfassen meist einen Linsenhalter und eine Linse. Daneben können noch weitere Elemente, beispielsweise ein Sender, ein Empfänger oder andere optische Elemente, wie Spiegel, vorhanden sein.

In einem bisherigen optischen System wird die Linse an einer festen Position mit einem Rastelement verrastet. Dies erlaubt zwar eine einfache Montage, jedoch ermöglicht ein solches System nicht die Justage der Linse relativ zum Linsenhalter, um beispielsweise Fertigungstoleranzen auszugleichen oder um das System an spezifische Kundenwünsche anzupassen. Die Verwendung abgeänderter Komponenten, wie etwa eines Senders mit einer entlang der optischen Achse verschobenen Sendeeinheit, macht es bei diesem System notwendig, einen an die geänderten Anforderungen angepassten Linsenhalter neu zu konstruieren und zu fertigen.

In einem weiteren bisher bekannten System wird die Linse mit dem Linsenhalter verklebt. Ein solches System ermöglicht zwar die Justierung der Linse relativ zum Linsenhalter entlang der optischen Achse der Linse, die Fertigung eines solchen Systems ist jedoch aufwändiger, da das Aushärten des Klebers eine Unterbrechung des Fertigungsvorgangs in der Regel für längere Zeit bedingt. Des Weiteren wird durch den Kleber sortenfremdes Material in das System eingeführt, was eine Verwertung am Ende der Lebensdauer des Produktes erschwert. Ferner leiden Kleber oft unter Alterungseffekten, was die Zuverlässigkeit oder die Lebensdauer des optischen Systems und damit des Sensors herabsetzen kann. Schließlich ist ein solches optisches System aufgrund der einzelnen Komponenten und des großen Fertigungsaufwandes teuer. Vorteilhaft bei einem System, in dem die Linse an den Linsenhalter geklebt wird, ist jedoch, dass die Linse meist in einem kontinuierlichen Bereich von Relativpositionen entlang ihrer optischen Achse an dem Linsenhalter angebracht werden kann. Dadurch können beispielsweise Fertigungstoleranzen durch eine Verschiebung der Linse in einem kontinuierlichen Bereich von entlang der optischen Achse gelegenen Relativpositionen ausgeglichen werden. Auch der Einbau modifizierter Komponenten oder die Anpassung an Kundenwünsche ist möglich.

Aus der US 2006 077 575 A1 ist ein Herstellverfahren eines Kameramodules bekannt, bei dem eine innere Objektivfassung und eine äussere Objektivfassung aus einem thermoplastischem Harz ausgeführt sind. Nach einer Fokuseinstellung bei der die innere Objektivfassung relativ zu der äußeren Objektivfassung gedreht wird, wird mit einem Laserstrahl eine Verbindung in dem Gewindebereich zwischen innerer Objektivfassung und äußerer Objektivfassung hergestellt und werden damit die beiden Objektivfassungen zueinander fixiert.

Die JP 2005 227 620 A zeigt eine Bildaufnahmevorrichtung und eine Vorrichtung und ein Verfahren zur Einstellung der Bildschärfe durch eine Verbesserung der Fokussierungsleistung durch Einstellen einer Linse. Eine Fassung umschliesst hierbei die Linse, so dass diese in der Fassung integiert ist. An der Aussenwandung der Fassung ist im Bereich der Linse eine Vertiefung ausgeführt, welche nach Einstellung der Linse mit Wärme beaufschlagt wird und damit die Linse in der Fassung fixiert. Aufgabe der vorliegenden Erfindung ist es, ein optisches System für einen Sensor bereitzustellen, bei dem die Linse in einem kontinuierlichen Bereich von Relativpositionen entlang ihrer optischen Achse relativ zu dem Linsenhalter an dem Linsenhalter anordenbar ist, bei dem jedoch die oben genannten Nachteile der Klebeverbindung nicht auftreten.

Erfindungsgemäß wird dies durch ein optisches System gelöst, das mindestens ein thermoplastisches Fixierelement zur Fixierung der Linse in einer gewünschten Relativposition durch thermoplastische Umformung des Fixierelementes aufweist. In einem erfindungsgemäßen Verfahren wird die Linse in einer gewünschten Relativposition entlang ihrer optischen Achse relativ zu dem Linsenhalter positioniert und anschließend die Linse durch thermoplastische Umformung des Fixierelementes am Linsenhalter fixiert.

Ein erfindungsgemäßes optisches System ist ohne Unterbrechung kontinuierlich bearbeitbar. Ein zeitaufwändiges Aushärten eines Klebers ist nicht notwendig. Die Abkühlzeit, während der das thermoplastische Fixierelement abkühlt und wieder fest wird, ist vergleichsweise kurz und unterbricht die Fertigung nicht oder nur kurz. Auch das Einbringen von fremden Werkstoffen wie Kleber ist nicht notwendig. Ein thermoplastisches Fixierelement kann die Linse über die gesamte Lebensdauer verlässlich am Linsenhalter fixieren, ohne dass sich die Eigenschaften des Systems verschlechtern. Spezifische Anforderungen können bei diesem System einfach umgesetzt werden. Auch die Verwendung als modulares System, bei dem ein Linsenhalter mit mehreren verschiedenen Linsen gepaart werden kann, ist möglich.

Die Erfindung kann mit folgenden, jeweils für sich vorteilhaften und beliebig kombinierbaren Weiterentwicklungen und Ausgestaltungen weiter verbessert werden.

Es kann mehr als ein thermoplastisches Fixierelement vorhanden sein. Die zwei oder mehr thermoplastischen Fixierelemente können entweder in einem einzigen Umformschritt gemeinsam oder jeweils einzeln für sich in einem einzelnen Schritt umgeformt werden.

Eine Ausgestaltung mit drei thermoplastischen Fixierelementen ermöglicht eine sichere Positionierung in drei Dimensionen. Oftmals ist es jedoch ausreichend, wenn lediglich zwei thermoplastische Fixierelemente vorhanden sind, was auch den Vorteil hat, dass eine eventuell notwendige Justierung aufgrund von geradlinigen Verläufen und rechten Winkeln einfacher sein kann. Zwei thermoplastische Fixierelemente können sich bezüglich der optischen Achse gegenüberliegen.

Die zwei oder mehr thermoplastischen Fixierelemente können symmetrisch angeordnet sein. Bei einer solchen Symmetrie kann es sich beispielsweise um eine Rotationssymmetrie um die optische Achse handeln. So können etwa drei thermoplastische Fixierelemente mit einer dreizähligen Rotationssymmetrie um die optische Achse angeordnet sein. Zwei thermoplastische Fixierelemente können um 180° um die optische Achse rotiert angeordnet sein. Es können auch andere Symmetrien, wie etwa Spiegelsymmetrien oder Punktsymmetrien vorhanden sein.

Um das eingangs erwähnte optische System mit einem Schnappmechanismus zu ersetzen, kann die Linse nicht in einem kontinuierlichen Bereich von Relativpositionen entlang ihrer optischen Achse an dem Linsenhalter anordenbar sein, sondern lediglich in mehreren diskreten Relativpositionen. Beispielsweise kann in einem solchen System die Linse temporär an einer solchen diskreten Relativposition gehalten sein und die Linse anschließend durch das Umformen des thermoplastischen Fixierelementes in dieser Position fixiert werden. Dazu können in den mehreren diskreten Relativpositionen Halteelemente vorhanden sein, die die Linse temporär bis zur Fixierung halten. Die diskreten Relativpositionen können allein durch einen Zahlenwert bestimmt sein. Alternativ können auch Elemente vorhanden sein, durch die die diskreten Relativpositionen festgelegt sind. Beispielsweise kann die Linse an einer solchen diskreten Relativposition verrasten oder einschnappen.

Eine besonders vorteilhafte Ausgestaltung eines Linsenhalters ist ein Tubus. Als Tubus ist ein im Wesentlichen rohr- oder zylinderförmiges Objekt zu verstehen, dessen Seiten- oder Mantelflächen teilweise oder komplett geschlossen sind. Die Grundfläche des Tubus ist vorzugsweise kreisförmig, insbesondere wenn die Linse kreisförmig ist. Allerdings sind auch andere Ausgestaltungen, wie etwa rechteckige, quadratische, polygonale, elliptische oder sonstige andere Ausgestaltungen der Grundfläche möglich. Die Längsachse eines solchen Tubus oder Zylinders verläuft in einer besonders vorteilhaften Ausgestaltung entlang der optischen Achse der Linse. Bei dem Tubus oder Zylinder kann es sich insbesondere um einen geraden Tubus oder Zylinder handeln, d.h., dass die Grundfläche und/oder die Deckfläche senkrecht zur Längsachse des Tubus oder Zylinders verlaufen können. Ein Tubus kann aus mehreren Einzelteilen zusammengebaut sein.

Das thermoplastische Fixierelement kann sich quer zur optischen Achse der Linse erstrecken. Es kann sich teilweise oder auch komplett quer zur optischen Achse erstrecken. Insbesondere kann es sich senkrecht zur optischen Achse erstrecken. Eine solche Ausgestaltung hat zum einen den Vorteil, dass bei der Fixierung eine Verschiebung der Linse durch den Umformvorgang verkleinert ist oder gänzlich wegfällt. Zum anderen kann bei einer solchen Ausgestaltung das thermoplastische Fixierelement außerhalb des Strahlengangs liegen, was die Qualität des Strahls nicht beeinträchtigt. Des Weiteren kann durch eine solche Ausgestaltung eine kompaktere Bauweise in Richtung der optischen Achse ermöglicht sein.

Das thermoplastische Fixierelement kann seitlich an der Linse angeordnet sein. Dadurch kann die Linse aufgrund der einfachen Geometrie und des langen Hebels sicher und präzise fixiert werden. Insbesondere kann die Linse in der gewünschten Relativposition sicher gehalten und in dieser mit geringen Toleranzen fixiert werden.

In einer vorteilhaften Ausgestaltung erstreckt sich das thermoplastische Fixierelement seitlich von der Linse weg. Dies ermöglicht eine kompakte Ausgestaltung in der Richtung der optischen Achse, ohne in die optische Fläche der Linse einzugreifen oder diese zu verkleinern, was zu einer Verschlechterung der Strahlenqualität führen könnte. Alternativ kann die Linse auch in eine seitlich angebrachte Aussparung der Linse, beispielsweise eine Nut, eingreifen, was eine kompakte Ausgestaltung quer zur optischen Achse ermöglicht.

Um den Fertigungsaufwand gering zu halten, ist das thermoplastische Fixierelement einstückig mit der Linse oder dem Linsenhalter. Bei einer solchen Ausgestaltung entfällt nicht nur der zusätzliche Schritt der Fertigung des Fixierelementes, sondern auch der Schritt der Montage des thermoplastischen Fixierelements an der Linse oder dem Linsenhalter. Das mit dem thermoplastischen Fixierelement einstückige Element kann also zum Beispiel komplett aus einem thermoplastischen Werkstoff bestehen. Das mit dem thermoplastischen Fixierelement einstückige Element kann ein Spritzgussteil sein. Unabhängig davon kann auch das andere Element, d.h. der Linsenhalter bzw. die Linse, ein Spritzgussteil sein. Bei dem Material für die Linse kann es sich insbesondere um Acrylglas (PMMA) handeln.

Das optische System weist ein Führungselement oder mehrere Führungselemente zur Führung der Linse relativ zum Linsenhalter entlang ihrer optischen Achse auf. Ein solches Führungselement befindet sich vorteilhafterweise am Linsenhalter. Es kann einstückig mit Elementen des optischen Systems, etwa mit dem Linsenhalter oder ein Teil des Linsenhalters sein. Es kann sich beispielsweise um Schlitze, Rillen, Nut und Feder oder einfach um vorspringende Elemente handeln. Zusätzlich können entsprechend angepasste Gegenelemente etwa an der Linse vorhanden sein.

Das Führungselement kann parallel zur optischen Achse der Linse verlaufen. Bei einer solchen Ausgestaltung ist eine Verschiebung der Linse entlang ihrer optischen Achse nur durch eine translatorische Bewegung möglich. Alternativ kann das Führungselement auch anders ausgestaltet sein, es muss lediglich eine Führung der Linse entlang ihrer optischen Achse ermöglichen. Als alternative Ausgestaltung sei hier zum Beispiel eine schraubenlinienförmige Ausgestaltung um die optische Achse herum erwähnt. Zur Bewegung entlang der optischen Achse ist es hier nötig, die Linse zu rotieren.

Das Führungselement kann gleichzeitig als Halteelement zum kurzzeitigen Halten der Linse am Linsenhalter bei der Positionierung oder dem Umformen ohne weitere Elemente dienen. Das Führungselement kann also eine Doppelfunktion erfüllen.

Erfindungsgemäß wird zur Fixierung der Linse am Linsenhalter das thermoplastische Fixierelement umgeformt. In einem Fall handelt es sich dabei um eine reibschlüssige Verbindung, etwa durch Einklemmen eines Teils zwischen einem weiteren Teil und dem umgeformten thermoplastischen Fixierelement.

In einer vorteilhaften Ausgestaltung weist das optische System ein Eingreifelement zur Herstellung eines Formschlusses mit dem thermoplastischen Fixierelement auf. Dieses kann sich etwa an dem Linsenhalter oder der Linse befinden. Beim Umformvorgang kann das thermoplastische Fixierelement an das Eingreifelement angeformt oder auf dieses aufgeformt werden und somit einen Formschluss zumindest entlang der optischen Achse, vorzugsweise aber auch entlang mehrerer oder aller anderen Richtungen herstellen. Im umgeformten Zustand ist das thermoplastische Fixierelement also zumindest teilweise komplementär mit dem Eingreifelement ausgestaltet. Idealerweise lässt sich die Linse dann überhaupt nicht mehr relativ zum Linsenhalter und/oder zum Rest des optischen Systems verschieben. Ein solches Eingreifelement kann Teil der Linse oder des Linsenhalters sein, insbesondere kann es einstückig mit der Linse oder dem Linsenhalter sein. In einer besonders vorteilhaften Ausgestaltung sind das thermoplastische Fixierelement einstückig mit der Linse oder dem Linsenhalter und das Eingreifelement einstückig mit dem jeweils anderen Element, also mit dem Linsenhalter bzw. der Linse verbunden.

Als Eingreifelemente können Strukturen dienen, die quer zur optischen Achse vorstehen oder zurückversetzt sind. Es können beispielsweise Riffelungen, Zähne, Stufen, Löcher oder Ähnliches vorhanden sein.

Das Eingreifelement kann an einem Führungselement angeordnet sein oder Teil des Führungselementes sein.

Das thermoplastische Fixierelement kann verschiedene Ausgestaltungen aufweisen. Es kann zum Beispiel stab- oder zylinderförmig, plattenartig, flügelartig oder in beliebigen anderen Formen ausgestaltet sein. Es kann insbesondere so ausgestaltet sein, dass es sich besonders leicht in einer Richtung quer zur optischen Achse verformen lässt, da dies die Verschiebung der Linse entlang ihrer optischen Achse während der Umformung minimiert.

Das umgeformte thermoplastische Fixierelement kann teilweise oder komplett umgeformt sein.

Als thermoplastisches Fixierelement kann in einer einfachen Ausgestaltung ein Teil oder Abschnitt des Linsenhalters oder der Linse dienen, der zur Fixierung umgeformt wird.

In einer besonders vorteilhaften Ausgestaltung sind zwei einander zugeordnete thermoplastische Fixierelemente zur Herstellung einer stoffschlüssigen Verbindung zwischen den beiden vorhanden. Beide werden, zumindest teilweise, gleichzeitig aufgeschmolzen und verschmelzen dabei. Eine solche stoffschlüssige Verbindung ist besonders zuverlässig und kann verhindern, dass sich die Linse im Laufe der Lebensdauer des optischen Systems vom Linsenhalter löst oder zumindest teilweise locker wird. Auch auf Eingreifelemente zur Herstellung eines Formschlusses kann in diesem Fall verzichtet werden. In einer speziellen Ausgestaltung sind ein erstes thermoplastisches Fixierelement am Linsenhalter und ein zweites, dem ersten thermoplastischen Fixierelement zugeordnetes thermoplastisches Fixierelement an der Linse jeweils einstückig mit dem Linsenhalter bzw. der Linse angeordnet.

Um eine falsche Montage zu verhindern, kann ein Kodierelement vorgesehen sein, das eine Verbindung der Linse mit dem Linsenhalter nur in einer einzigen Position erlaubt.

Mehrere Funktionen oder Elemente können in einem einzigen Element vereint sein. Beispielsweise kann ein Führungselement gleichzeitig als thermoplastisches Fixierelement dienen. Auch ein Eingreifelement kann als thermoplastisches Fixierelement, insbesondere als ein einem ersten thermoplastischen Fixierelement zugeordnetes zweites thermoplastisches Fixierelement dienen.

Selbstverständlich kann jedes der oben erwähnten Funktionselemente, wie ein Führungselement, ein Halteelement, ein Eingreifelement oder ähnliches auch mehr als einmal in dem optischen System vorhanden sein.

Ein optisches System kann einen Linsenhalter und mehr als eine Linse aufweisen. Beispielsweise können zwei Linsen in einem einzigen Linsenhalter anordenbar sein. In einem optischen System können auch mehrere Linsenhalter mit jeweils einer oder mit mehreren Linsen vorhanden sein. Insbesondere kann für jede Linse ein thermoplastisches Fixierelement vorhanden sein.

Ein erfindungsgemäßer Sensor umfasst ein erfindungsgemäßes optisches System.

In einem erfindungsgemäßen Verfahren wird die Linse in einer gewünschten Relativposition entlang ihrer optischen Achse relativ zu dem Linsenhalter positioniert und anschließend durch thermoplastische Umformung eines thermoplastischen Fixierelementes in dieser Position fixiert. Das thermoplastische Fixierelement kann dabei die schon oben erwähnten Ausgestaltungen aufweisen.

Bei der Positionierung der Linse kann die Linse an dem thermoplastischen Verbindungselement bewegt werden, insbesondere wenn das thermoplastische Fixierelement vor der Fixierung mit der Linse verbunden ist.

Bei der Fertigung mehrerer optischer Systeme mit einer Linse und einem Linsenhalter kann die Linse jeweils in einer einzigen diskreten Relativposition an dem Linsenhalter fixiert werden. Mit dem erfindungsgemäßen Verfahren ist es jedoch auch möglich, die Linse an jeweils verschiedenen Relativpositionen zu fixieren. Beispielsweise können mehrere diskrete Relativpositionen oder eine variable gewünschte Relativposition benutzt werden.

In einer ersten vorteilhaften Ausgestaltung der Positionierung können beispielsweise Linsen mit verschiedenen optischen Eigenschaften in verschiedenen Relativpositionen positioniert werden. So können etwa mit einem einzigen Linsenhalter Linsen mit verschiedenen Brennweiten benutzt werden. In diesem Fall ermöglicht die Erfindung eine modulare Verwendung von verschiedenen Linsen und Linsenhaltern, wodurch die Fertigung jeweils spezifischer Linsenhalter nicht mehr notwendig ist. Auch die Anpassung an Kundenwünsche ist durch die Erfindung erleichtert. Beispielsweise kann eine gewünschte Linse an den Linsenhalter in der richtigen Position, die beispielsweise errechnet wurde, angebracht werden. Auch Änderungen an anderen optischen Komponenten, wie etwa eine Verschiebung einer Sendeeinheit entlang der Richtung der optischen Achse der Linse, erfordern keine komplette Neukonstruktion und Neufertigung spezifischer Linsenhalter.

In einer zweiten, besonders vorteilhaften Ausgestaltung des Positionierschrittes erfolgt die Positionierung der Linse durch wiederholtes Messen eines Parameters und anschließendes, wiederholtes Neupositionieren der Linse in Abhängigkeit vom gemessenen Parameterwert. So kann es etwa gewünscht sein, dass sich der Fokuspunkt der Linse in einer bestimmten Position befindet. An diesem Punkt kann eine Messvorrichtung vorhanden sein, die misst, ob sich der Fokuspunkt an diesem Punkt befindet. Falls dies nicht der Fall ist, kann die Linse, auch wiederholt, in ihrer Position entlang der optischen Achse korrigiert werden und der Wert erneut gemessen werden, so lange, bis eine gewünschte Übereinstimmung vorliegt. Anschließend kann die Linse relativ zum Linsenhalter fixiert werden.

Das thermoplastische Fixierelement kann während des Umformens komplett oder auch nur teilweise umgeformt werden.

Die zur Umformung notwendige Temperatur kann durch Wärmeeintrag in das thermoplastische Fixierelement, beispielsweise über eine Nietspitze, ein erwärmbares Stempelwerkzeug oder Ähnliches erreicht werden.

Alternativ kann die Wärme im thermoplastischen Element selbst erzeugt werden, beispielsweise durch Absorption elektromagnetischer Strahlung, etwa Laserstrahlung, oder durch die bei einem ein Reib- oder Ultraschallverfahren verursachte Reibung.

In einer weiteren alternativen Ausführung kann das Fixierelement aufgrund von Krafteinwirkung plastisch verformt werden.

Bei der Umformung kann das thermoplastische Fixierelement durch ein Formstempelwerkzeug gezielt in eine gewünschte Form gebracht werden. Alternativ kann mit einem Stempelwerkzeug lediglich eine Kraft auf das thermoplastische Fixierelement ausgeübt werden, das sich dadurch mehr oder weniger zufällig verformt. Es ist auch möglich, dass sich das thermoplastische Fixierelement ohne Werkzeug von selbst verformt, etwa indem es zerfließt und erstarrt. Die resultierende Form ist dann eher zufällig.

In einer vorteilhaften Ausgestaltung wird ein zur thermoplastischen Umformung benutztes Werkzeug, beispielsweise ein Stempelwerkzeug oder eine Nietspitze, gleichzeitig zur Positionierung eingesetzt. Beim Positionierschritt kann dieses Werkzeug beispielsweise das thermoplastische Fixierelement halten und anschließend aufgeheizt werden und damit die Fixierung der Linse bewirken. Bei einem erfindungsgemäßen Verfahren kann gleichzeitig zur Positionierung der Linse schon das thermoplastische Fixierelement aufgeheizt werden, was Zeit und Energie sparen kann.

Im Folgenden wird die Erfindung anhand vorteilhafter Ausführungsformen mit Bezug auf die Zeichnungen beispielhaft näher erläutert. Die beschriebenen Ausführungsformen stellen dabei lediglich mögliche Ausgestaltungen dar, bei denen die einzelnen Merkmale, wie oben beschrieben, unabhängig voneinander kombiniert oder weggelassen werden können. Gleiche Bezugszeichen stehen dabei in den verschiedenen Zeichnungen jeweils für gleiche Gegenstände.

Es zeigen:
- Fig. 1: eine erste Ausführungsform eines erfindungsgemäßen optischen Systems in einem Vormontagezustand in einer schematischen Perspektivdarstellung;
- Fig. 2: das erfindungsgemäße optische System aus Fig. 1 während des Positionierschrittes in einer schematischen Perspektivdarstellung;
- Fig. 3: ein Detail des in den Fig. 1 und 2 dargestellten optischen Systems nach dem Fixierschritt in einer schematischen Perspektivdarstellung;
- Fig. 4: eine zweite Ausführungsform eines erfindungsgemäßen optischen Systems in einer schematischen Perspektivdarstellung;
- Fig. 5: ein Detail des optischen Systems aus Fig. 4 in einer schematischen Perspektivdarstellung;
- Fig. 6: eine dritte Ausführungsform eines erfindungsgemäßen optischen Systems in einer schematischen Perspektivdarstellung;
- Fig. 7: ein Detail des optischen Systems aus Fig. 6 in einer schematischen Perspektivdarstellung.

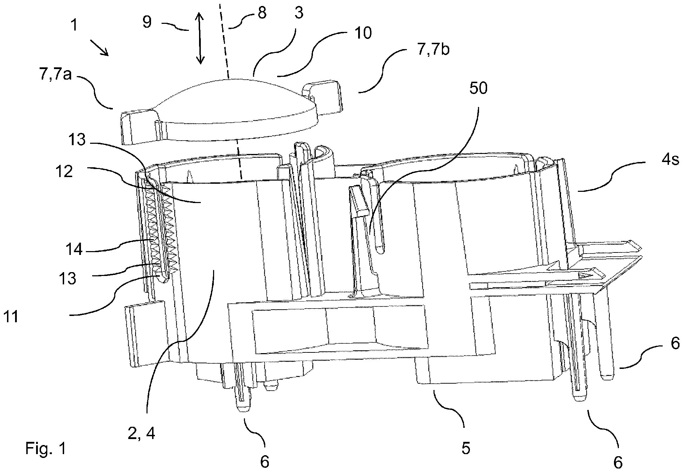

In Fig. 1 ist eine erste Ausführungsform eines erfindungsgemäßen optischen Systems 1 für einen Sensor (nicht gezeigt) in einer Vormontageposition dargestellt. Eine erste Ausführungsform eines Linsenhalters 2 ist bereit zur Verbindung mit einer ersten Ausführungsform einer Linse 3. Bei dem Linsenhalter 2 handelt es sich um eine erste Ausführungsform eines Tubus 4. Neben der erfindungsgemäßen, vorteilhaften Ausgestaltung des Tubus 4 auf der linken Seite ist auf der rechten Seite noch ein weiterer Tubus 4s vorhanden, der einen Schnappmechanismus 50 zur Anbringung einer weiteren Linse (nicht gezeigt) aufweist.

An der Unterseite 5 weist der Linsenhalter 2 Befestigungselemente 6 zur Befestigung an weiteren Elementen, zum Beispiel einer Platine (nicht gezeigt) mit einer Sendeeinheit, auf.

Der Linsenhalter 2 und die Linse 3 sind jeweils Spritzgussteile. Die Linse 3 ist aus einem transparenten Material, wie etwa Acrylglas, gefertigt. Der Linsenhalter 2 kann aus einem anderen Material, insbesondere einem opaken Material gefertigt sein, um ein ungewolltes Einstreuen von externem Licht zu vermeiden.

An der Linse 3 sind zwei thermoplastische Fixierelemente 7, 7a, 7b angeordnet. Die beiden thermoplastischen Fixierelemente 7, 7a, 7b liegen sich bezüglich der optischen Achse 8 gegenüber und sind seitlich an der Linse 3, d.h. quer zur optischen Achse 8 abstehend am Rand der Linse 3 angeordnet. Sie erstrecken sich jeweils quer zur optischen Achse 8 von der Linse 3 weg. Ferner erstrecken sie sich entlang einer Verschieberichtung 9, die parallel zur optischen Achse 8 verläuft und entlang der die Linse 3 an dem Linsenhalter 2 geführt wird. Die thermoplastischen Fixierelemente 7, 7a, 7b sind außerhalb der optischen Fläche 10 der Linse 3 angeordnet und stören somit nicht das durch die Linse durchtretende Licht.

Die thermoplastischen Fixierelemente 7, 7a, 7b sind plattenförmig ausgebildet und erstrecken sich quer zur und entlang der Verschieberichtung 9. Durch eine solche Ausgestaltung wird eine sichere Führung in den Führungselementen 11, die hier in Form von Schlitzen 12 ausgeführt sind. Die Schlitze 12 sind eine einfache Ausführungsform, die lediglich durch eine Aussparung 13 in den Seitenflächen 19 des Tubus 4 entstehen. Die Führungselemente 11 stellen sicher, dass die Linse 3 entlang ihrer optischen Achse 8 geführt wird. Bei einer entsprechend passgenauen Ausgestaltung der thermoplastischen Fixierelemente 7, 7a, 7b und der Führungselemente 11 kann die Linse 3 gleichzeitig im Linsenhalter 2 gehalten sein. Die Führungselemente 11 können also gleichzeitig als Halteelemente 14 dienen, die die Linse 3 ohne die Zuhilfenahme weiterer Elemente halten.

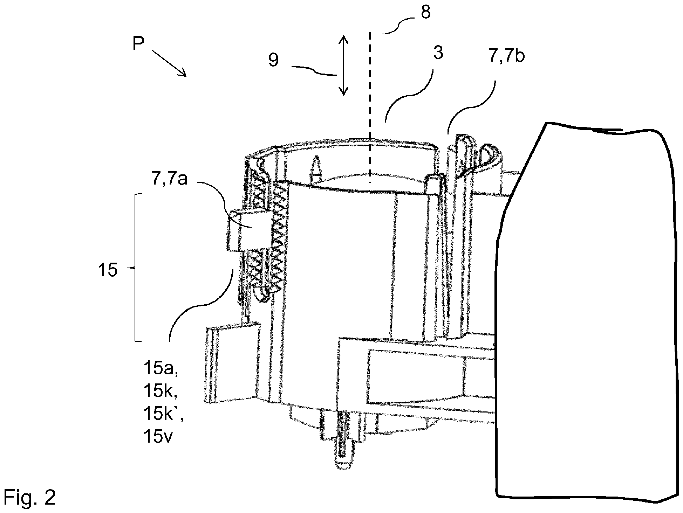

In Fig. 2 ist die Ausführungsform des optischen Systems 1 aus Fig. 1 während eines Positionierschrittes P, in dem die Linse 3 in einer gewünschten Relativposition 15a aus einem kontinuierlichen Bereich von Relativpositionen 15 entlang der optischen Achse 8 relativ zu dem Linsenhalter 2 positioniert wird, dargestellt. Der kontinuierliche Bereich von Relativpositionen 15 erstreckt sich entlang der optischen Achse 8. Die Linse 3 kann entlang einer Verschieberichtung 9 in diesem kontinuierlichen Bereich von Relativpositionen 15 positioniert werden. In jeder Relativposition weist die Linse 3 einen charakteristischen, entlang der optischen Achse 8 gemessenen Verschiebewert relativ zum Linsenhalter 2 auf. Bei der Positionierung kann die Linse 3 beispielsweise an den thermoplastischen Fixierelementen 7, 7a, 7b gehalten und/oder bewegt werden. Auch ein Halten der Linse 3 an ihrer Oberseite oder an anderen Teilen der Linse 3 ist möglich.

Bei der Fertigung mehrerer optischer Systeme 1 beispielsweise in einer Serienfertigung, kann die Linse 3 an der jeweils gleichen gewünschten Relativposition 15a erfolgen. Eine solche diskrete Relativposition 15k kann eine schnelle Fertigung ermöglichen. Dabei können für verschiedene Anwendungen verschiedene diskrete Relativpositionen vorhanden sein. Die hier gezeigte diskrete Relativposition 15k kann also insbesondere eine erste diskrete Relativposition 15k' von mehreren diskreten Relativpositionen sein. Bei einem anderen Anwendungsfall, insbesondere wenn zum Beispiel eine andere Linse 3 benutzt wird, kann sich eine weitere diskrete Relativposition ergeben.

Alternativ kann die gewünschte Relativposition 15a auch eine variable gewünschte Relativposition 15v sein, die für jedes gefertigte optische System 1 mehr oder weniger stark variiert. In dem hier gezeigten Positionierschritt P kann beispielsweise ein Parameter gemessen werden und die gewünschte Relativposition 15a durch wiederholtes Messen des gewünschten Parameters und wiederholtes Neupositionieren der Linse 3 ermittelt werden, bis der Parameter einen gewünschten Wert oder Wertebereich erreicht. So kann etwa an einer gewünschten Position des Fokuspunktes ein Messsystem vorhanden sein, das feststellt, ob sich der Fokuspunkt dort befindet. Bei Abweichungen kann die Linse 3 entlang ihrer optischen Achse 8 verschoben werden, bis die Linse ausreichend genau positioniert ist. Daraus ergibt sich eine variable gewünschte Relativposition 15v, die für jedes gefertigte optische System 1 mehr oder weniger stark von anderen direkt davor oder danach gefertigten optischen Systemen 1 abweicht.

Nach der Positionierung im Positionierschritt P erfolgt die Fixierung der Linse 3 durch Umformung der thermoplastischen Fixierelemente 7, 7a, 7b. Dies kann gleichzeitig oder nacheinander erfolgen. Dazu müssen die thermoplastischen Fixierelemente 7, 7a, 7b, zumindest teilweise, erwärmt werden, so dass sie thermoplastisch um- oder verformbar sind. Die Wärme kann von außen auf das thermoplastische Fixierelement 7, 7a, 7b einwirken, beispielsweise durch eine Nietspitze oder ein anderes warmes oder heizbares Element. Die Wärme kann auch erst im thermoplastischen Fixierelement 7, 7a, 7b entstehen. So können beispielsweise Ultraschall- oder Reibschweißverfahren eine Reibung zwischen dem thermoplastischen Fixierelement 7, 7a, 7b und damit verbundenen Elementen erzeugen, was zu Wärmebildung führen kann. Auch die Absorption von elektromagnetischer Strahlung, wie etwa Laserstrahlung, kann zur Erzeugung von Wärme im thermoplastischen Fixierelement 7, 7a, 7b führen.

Aufgrund der erhöhten Temperatur ist das thermoplastische Fixierelement 7, 7a, 7b verformbar. Durch Krafteinwirkung kann es nun in eine andere Form gebracht werden. Die Form kann sich aus der Form eines Stempels, der zur Verformung benutzt wird, vorgegeben oder auch mehr oder weniger zufällig sein. Die einwirkende Kraft kann auch lediglich die Gravitationskraft sein, so dass das thermoplastische Fixierelement 7, 7a, 7b selbsttätig in eine neue Form fließt. Auch interne Kräfte wie Kohäsionskräfte des flüssigen Materials können zu einer Verformung des thermoplastischen Fixierelementes 7, 7a, 7b führen, ohne dass ein Werkzeug benutzt werden muss.

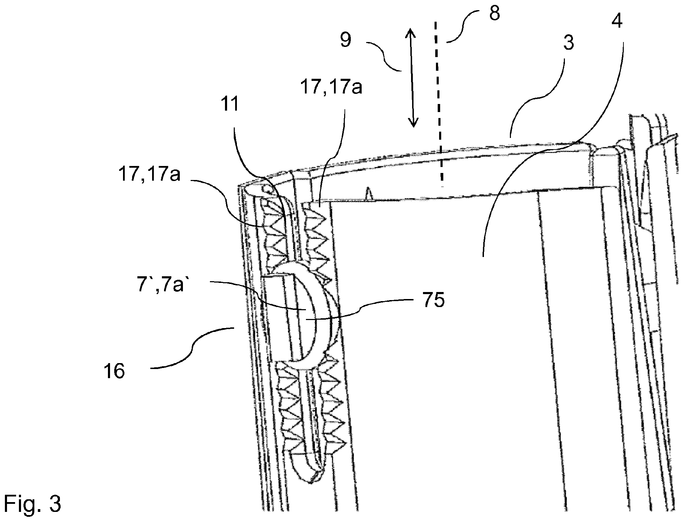

In Fig. 3 ist ein Detail des optischen Systems 1 aus den Figuren 1 und 2 nach dem Fixierschritt zu sehen. Zu erkennen ist ein umgeformtes thermoplastisches Fixierelement 7', 7a'. Bei der Fixierung wurde es entlang einer ersten Stauchrichtung 16, die senkrecht zur optischen Achse 8 und auf die optische Achse 8 hin gerichtet ist, gestaucht. In einem Mittelbereich 75 ist es nun knopf- oder scheibenförmig.

Das umgeformte thermoplastische Fixierelement 7', 7a' steht in Eingriff mit Eingreifelementen 17. Die Eingreifelemente 17 sind als Reihen von Zähnen 17a, die entlang des Führungselementes 11 angeordnet sind, ausgebildet. Die Zähne 17a stehen entlang der Stauchrichtung 16 vom Tubus 4 ab und bilden eine Struktur, die in einem Formschluss entlang der Verschieberichtung 9 mit dem umgeformten thermoplastischen Fixierelement 7', 7a' steht, so dass eine Verschiebung entlang der Verschieberichtung 9 und damit entlang der optischen Achse 8 blockiert ist. Ferner wird der Tubus 4 durch die Stauchung des thermoplastischen Fixierelementes zwischen dem umgeformten thermoplastischen Fixierelement 7', 7a' und dem Rest der Linse 3 eingeklemmt. Das umgeformte thermoplastische Fixierelement 7', 7a' fixiert die Linse 3 also sowohl reib- als auch formschlüssig. Insbesondere ist das umgeformte thermoplastische Fixierelement 7', 7a' zumindest teilweise komplementär zu den Eingreifelementen 17. Eine Bewegung der Linse 3 relativ zum Tubus 4 ist durch die komplementäre Ausgestaltung also insbesondere nicht nur eingeschränkt, sondern gänzlich blockiert.

Die in den Figuren 1 bis 3 dargestellte Ausführungsform eines optischen Systems 1 ist besonders vorteilhaft, da das thermoplastische Verbindungselement 7, 7a einstückig mit der Linse 3 und die Eingreifelemente 17 einstückig mit dem Linsenhalter 2 in Form des Tubus 4 sind. Weitere Teile oder Elemente sind nicht notwendig und eine Fertigung sowie eine Montage sind dadurch besonders einfach.

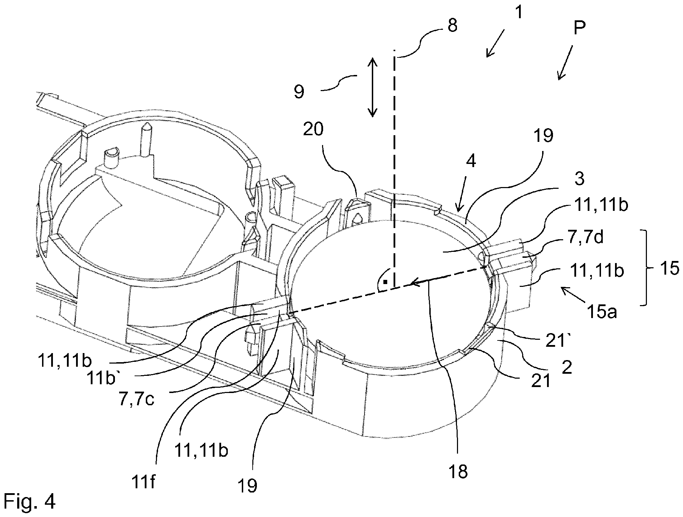

In Fig. 4 ist eine zweite Ausführungsform eines optischen Systems 1 dargestellt. Das optische System 1 ist während des Positionierschritts P gezeigt, in dem die Linse 3 in einer gewünschten Relativposition 15a relativ zum Linsenhalter 2 positioniert wird. Die gewünschte Relativposition 15a befindet sich in einem kontinuierlichen Bereich 15 von möglichen Relativpositionen entlang der Verschieberichtung 9, die parallel zur optischen Achse 8 der Linse 3 verläuft. Die in dieser Figur gezeigte Linse 3 entspricht im Wesentlichen der Linse 3 aus den Fig. 1 bis 3. Insbesondere sind auch die thermoplastischen Fixierelemente 7, 7c, 7d dieser Ausführungsform den thermoplastischen Fixierelementen 7a, 7b der ersten Ausführungsform aus den Fig. 1 bis 3 ähnlich. Sie sind ebenfalls einstückig mit der Linse 3 verbunden und verlaufen plattenförmig entlang der Verschieberichtung 9 und entlang einer ersten Querrichtung 18, die senkrecht zur Verschieberichtung 9 und auf die optische Achse 8 hin gerichtet ist. In dem hier gezeigten optischen System 1 sind an dem Linsenhalter 2 zweite Ausführungsformen 11b von Führungselementen 11 dargestellt. Die zweite Ausführungsform 11b von Führungselementen 11 erstreckt sich seitlich von den Seitenwänden 19 des Tubus 4 weg. An ihren Innenseiten 11b' bilden sie eine glatte Führungsfläche 11f für die thermoplastischen Fixierelemente 7, 7c, 7d.

Zu erkennen ist in Fig. 4 auch ein Federelement 20, das eine Federkraft auf die Linse 3 ausübt und sie dadurch hält.

Weiter ist ein Kodierelement 21 gezeigt, das sich am Tubus 4 befindet und zusammen mit einem Gegenkodierelement 21' an der Linse und aufgrund der asymmetrischen Ausrichtung relativ zu den thermoplastischen Fixierelementen 7, 7c, 7d und den Führungselementen 11, 11b eine Orientierung der Linse relativ zum Tubus nur in einer einzigen Relativorientierung ermöglicht. Ein falsches Einführen, beispielsweise mit der Oberseite 3' der Linse 3 nach unten ist dadurch ausgeschlossen.

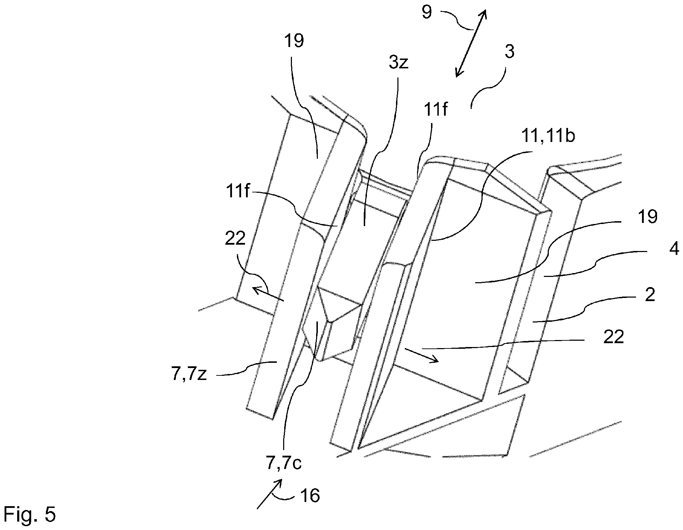

In Fig. 5 ist ein Detail der Ausführungsform des optischen Systems 1 aus Fig. 4 vergrößert dargestellt. Zu erkennen sind die Führungselemente 11, 11b, die das als Zapfen 3z ausgeformte thermoplastische Fixierelement 7, 7c führen. Sie erstrecken sich seitlich, d. h. senkrecht zur optischen Achse von den Seitenwänden 19 des Tubus 4 weg und sind einteilig mit diesem. Die Verbindung des thermoplastischen Fixierelementes 7, 7c mit den Führungselementen 11, 11b und damit eine Fixierung der Linse 3 relativ zum Linsenhalter 2 ist auf verschiedene Arten möglich:
In einer ersten Variante wird nur das thermoplastische Fixierelement 7, 7c, zumindest teilweise, erwärmt und anschließend entlang einer Stauchrichtung 16 zur Linse 3 und insbesondere zur optischen Achse hin gestaucht. In einer solchen gestauchten Form drückt dann das umgeformte thermoplastische Fixierelement (nicht dargestellt) in einer Richtung 22, die senkrecht zur Stauchrichtung 16 und senkrecht zur optischen Achse 8 verläuft, auf die Innenflächen 11b der Führungselemente 11, 11b. Das umgeformte thermoplastische Fixierelement ist also zwischen den beiden Führungselementen 11, 11b eingeklemmt und stellt eine reibschlüssige Verbindung mit den Führungselementen 11, 11b her. Um diesen Einklemmeffekt zu erreichen, kann das thermoplastische Fixierelement 7, 7c auch entlang der Verschieberichtung 9 gestaucht werden.

In einer zweiten Variante wird nicht nur das thermoplastische Fixierelement 7, 7c, zumindest teilweise, sondern auch mindestens eines der Führungselemente 11, 11b, zumindest teilweise, aufgeschmolzen. Ein solches zumindest teilweise aufgeschmolzenes Führungselement 11, 11b fungiert also als weiteres, dem thermoplastischen Fixierelement 7c zugeordnetes thermoplastisches Fixierelement 7z. Die beiden thermoplastischen Fixierelemente 7c, 7z verschmelzen miteinander und bilden dadurch eine stoffschlüssige und dadurch sehr starke Verbindung. Ein solches Verschmelzen kann etwa durch Ultraschallschweißen oder Reibschweißen, bei dem die beiden thermoplastischen Fixierelemente 7c, 7z zumindest an ihren Grenzflächen aneinander reiben und dadurch Wärme erzeugen, realisiert sein.

In einer dritten Variante kann mindestens eines der Führungselemente 11, 11b als ein einziges thermoplastisches Fixierelement 7, 7s dienen. Bei Erwärmung kann sich ein solches Führungselement 11, 11b verformen lassen und um den nicht aufgeschmolzenen Flügel oder Zapfen 3z, der sich von der Linse 3 weg erstreckt, herumgeformt werden, so dass ein Formschluss entlang der Verschieberichtung 9 parallel zur Richtung der optischen Achse entsteht.

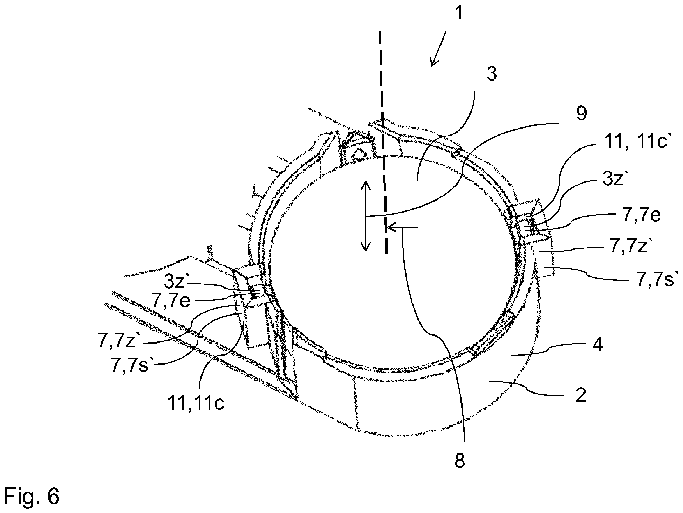

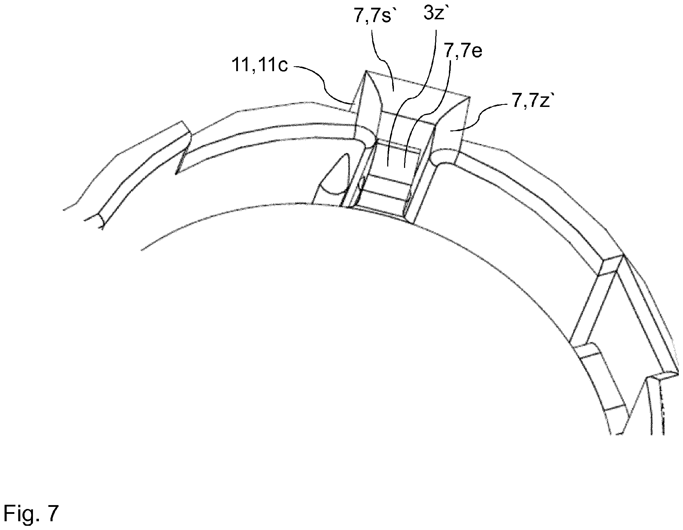

In den Fig. 6 und 7 ist eine dritte Ausführungsform des optischen Systems 1 gezeigt. Bei der hier gezeigten Ausführungsform ist der Tubus 4 im Bereich der Führungselemente 11, 11c geschlossen. Die Führungselemente 11, 11 c sind also als eine Rille 11c' ausgestaltet, die entlang der Verschieberichtung 9, parallel zur optischen Achse, verläuft und eine Verschiebung der Linse 3 entlang dieser Verschieberichtung 9 ermöglicht. Aufgrund der geschlossenen Ausführung ist ein solches optisches System 1 weniger anfällig für Kontamination wie Dreck oder Wasser. Ferner sind Ein- oder Ausstreueffekte von Licht minimiert. Die Fixierung der Linse 3 dieser dritten Ausführungsform kann ähnlich wie in den Ausführungen der Fig. 4 erläutert durchgeführt werden. So kann etwa einer der sich seitlich von der Linse 3 weg erstreckenden Zapfen 3z' als thermoplastisches Fixierelement 7, 7e fungieren und einen zumindest reibschlüssigen Halt in der Rille 11c' und damit im Linsenhalter 2 erzeugen. Zusammen mit dem Zapfen 3z' kann ein Führungselement 11, 11c ein dem thermoplastischen Fixierelement 7e zugeordnetes thermoplastisches Fixierelement 7z' bilden, das zusammen mit dem thermoplastischen Fixierelement 7e aufgeschmolzen wird und dadurch eine stoffschlüssige Verbindung mit ihm eingeht. Alternativ kann auch lediglich eines der Führungselemente 11, 11c als ein einziges thermoplastisches Fixierelement 7, 7s so umgeformt werden, dass es die Bewegung des zugehörigen Zapfens 3z' blockiert.

## Patentansprüche

1. Optisches System für einen Sensor, umfassend einen Linsenhalter (2) und eine Linse (3), die in einem kontinuierlichen Bereich (15) von Relativpositionen entlang ihrer optischen Achse (8) an dem Linsenhalter (2) anordenbar ist, wobei das optische System mindestens ein thermoplastisches Fixierelement (7, 7a, 7b, 7c, 7d, 7e, 7s, 7s', 7z, 7z') zur Fixierung der Linse (3) in einer gewünschten Relativposition (15a, 15k, 15k', 15v) durch thermoplastische Umformung des Fixierelementes (7, 7a, 7b, 7c, 7d, 7e, 7s, 7s', 7z, 7z') aufweist, wobei das optische System ein Führungselement (11, 11a, 11b, 11c, 11c') zur Führung der Linse (3) relativ zum Linsenhalter (2) entlang ihrer optischen Achse (8) aufweist, **dadurch gekennzeichnet, dass** das thermoplastische Fixierelement (7, 7a, 7b, 7c, 7d, 7e, 7s, 7s', 7z, 7z') einstückig mit der Linse (3) oder dem Linsenhalter (2) ist.

2. Optisches System nach Anspruch 1, **dadurch gekennzeichnet, dass** die Linse (3) in mehreren diskreten Relativpositionen (15k, 15k') entlang ihrer optischen Achse (8) an dem Linsenhalter (2) anordenbar ist.

3. Optisches System nach einem der Ansprüche 1 bis 2, **dadurch gekennzeichnet, dass** der Linsenhalter (2) ein Tubus (4) ist.

4. Optisches System nach einem der Ansprüche 1 bis 3, **dadurch gekennzeichnet, dass** sich das thermoplastische Fixierelement (7, 7a, 7b, 7c, 7d, 7e, 7s, 7s', 7z, 7z') quer zur optischen Achse (8) der Linse (3) erstreckt.

5. Optisches System nach einem der Ansprüche 1 bis 4, **dadurch gekennzeichnet, dass** das optische System ein Eingreifelement (17) zur Herstellung eines Formschlusses mit dem thermoplastischen Fixierelement (7, 7a, 7b, 7c, 7d, 7e, 7s, 7s', 7z, 7z') aufweist.

6. Optisches System nach einem der Ansprüche 1 bis 5, **dadurch gekennzeichnet, dass** zwei einander zugeordnete thermoplastische Fixierelemente (7, 7a, 7b, 7c, 7d, 7e, 7s, 7s', 7z, 7z') zur Herstellung einer stoffschlüssigen Verbindung zwischen den beiden vorhanden sind.

7. Sensor, **dadurch gekennzeichnet, dass** er ein optisches System nach einem der Ansprüche 1 bis 6 umfasst.

8. Verfahren zur Fixierung einer Linse (3) an einem Linsenhalter (2) für einen Sensor, wobei es die Schritte:
- Positionierung (P) der Linse (3) an einer gewünschten Relativposition (15a, 15k, 15k', 15v) entlang ihrer optischen Achse (8) relativ zu dem Linsenhalter (2); und
- Fixierung der Linse (3) relativ zum Linsenhalter (2) durch thermoplastische Umformung eines thermoplastischen Fixierelements (7, 7a, 7b, 7c, 7d, 7e, 7s, 7s', 7z, 7z') umfasst, und wobei das optische System ein Führungselement (11, 11a, 11b, 11c, 11c') zur Führung der Linse (3) relativ zum Linsenhalter (2) entlang ihrer optischen Achse (8) aufweist, **dadurch gekennzeichnet, dass** das thermoplastische Fixierelement (7, 7a, 7b, 7c, 7d, 7e, 7s, 7s', 7z, 7z') einstückig mit der Linse (3) oder dem Linsenhalter (2) ist.

9. Verfahren nach Anspruch 8, **dadurch gekennzeichnet, dass** die gewünschte Relativposition (15a, 15k, 15k', 15v) durch wiederholtes Messen eines Parameters und anschließendes Neupositionieren der Linse (3) in Abhängigkeit vom gemessenen Parameterwert ermittelt wird.

10. Verfahren nach einem der Ansprüche 8 oder 9, **dadurch gekennzeichnet, dass** ein zur thermoplastischen Umformung benutztes Werkzeug gleichzeitig zur Positionierung (P) eingesetzt wird.

## Claims

1. Optical system for a sensor, comprising a lens holder (2) and a lens (3) which can be positioned on the lens holder (2) in a continuous range (15) of relative positions along its optical axis (8), whereby the optical system comprises at least one thermoplastic fixing element (7, 7a, 7b, 7c, 7d, 7e, 7s, 7s', 7z, 7z') for fixing the lens (3) in a desired relative position (15a, 15k, 15k', 15v) through the thermoplastic forming of the fixing element (7, 7a, 7b, 7c, 7d, 7e, 7s, 7s', 7z, 7z'), whereby the optical system comprises a guiding element (11, 11a, 11b, 11c, 11c') for guiding the lens (3) along its optical axis (8) relative to the lens holder (2), **characterized in that** the thermoplastic fixing element (7, 7a, 7b, 7c, 7d, 7e, 7s, 7s', 7z, 7z') is integral with the lens (3) or the lens holder (2).

2. Optical system in accordance with Claim 1, **characterized in that** the lens (3) can be positioned on the lens holder (2) in several discrete relative positions (15k, 15k') along its optical axis (8).

3. Optical system in accordance with any one of Claims 1 to 2, **characterized in that** the lens holder (2) is a tube (4).

4. Optical system in accordance with any one of Claims 1 to 3, **characterized in that** the thermoplastic fixing element (7, 7a, 7b, 7c, 7d, 7e, 7s, 7s', 7z, 7z') extends at right angles to the optical axis (8) of the lens (3).

5. Optical system in accordance with any one of Claims 1 to 4, **characterized in that** the optical system has an engagement element (17) for establishing a positive connection with the thermoplastic fixing element (7, 7a, 7b, 7c, 7d, 7e, 7s, 7s', 7z, 7z').

6. Optical system in accordance with any one of Claims 1 to 5, **characterized in that** two thermoplastic fixing elements (7, 7a, 7b, 7c, 7d, 7e, 7s, 7s', 7z, 7z') assigned to each other are present to establish a material connection between the two.

7. Sensor, **characterized in that** it comprises an optical system in accordance with any one of Claims 1 to 6.

8. Procedure for fixing a lens (3) to a lens holder (2) for a sensor, comprising the steps of:
- Positioning (P) the lens (3) at a desired relative position (15a, 15k, 15k', 15v) along its optical axis (8) relative to the lens holder (2); and
- Fixing the lens (3) relative to the lens holder (2) through the thermoplastic forming of a thermoplastic fixing element (7, 7a, 7b, 7c, 7d, 7e, 7s, 7s', 7z, 7z'), and whereby the optical system comprises a guiding element (11, 11a, 11b, 11c, 11c') for guiding the lens (3) along its optical axis (8) relative to the lens holder (2), **characterized in that** the thermoplastic fixing element (7, 7a, 7b, 7c, 7d, 7e, 7s, 7s', 7z, 7z') is integral with the lens (3) or the lens holder (2).

9. Procedure in accordance with Claim 8, **characterized in that** the desired relative position (15a, 15k, 15k', 15v) is determined by the repeated measurement of one parameter and the subsequent repositioning of the lens (3) as a function of the measured parameter value.

10. Procedure in accordance with any one of Claims 8 or 9, **characterized in that** a tool used for thermoplastic forming is simultaneously used for positioning (P).

## Revendications

1. Système optique pour un capteur, comprenant un porte-lentille (2) et une lentille (3), qui peut être disposée dans une zone continue (15) de positions relatives le long de son axe optique (8) sur le porte-lentille (2), le système optique présentant au moins un élément de fixation thermoplastique (7, 7a, 7b, 7c, 7d, 7e, 7s, 7s', 7z, 7z') pour la fixation de la lentille (3) dans une position relative souhaitée (15a, 15k, 15k', 15v) par déformation thermoplastique de l'élément de fixation (7, 7a, 7b, 7c, 7d, 7e, 7s, 7s', 7z, 7z'), le système optique présentant un élément de guidage (11, 11a, 11b, 11c, 11c') permettant de guider la lentille (3) par rapport au porte-lentille (2) le long de son axe optique (8), **caractérisé en ce que** l'élément de fixation thermoplastique (7, 7a, 7b, 7c, 7d, 7e, 7s, 7s', 7z, 7z') est formé d'un seul tenant avec la lentille (3) ou le porte-lentille (2).

2. Système optique selon la revendication 1, **caractérisé en ce que** la lentille (3) peut être disposée dans plusieurs positions relatives distinctes (15k, 15k') le long de son axe optique (8) sur le porte-lentille (2).

3. Système optique selon l'une des revendications 1 à 2, **caractérisé en ce que** le porte-lentille (2) est un tube (4).

4. Système optique selon l'une des revendications 1 à 3, **caractérisé en ce que** l'élément de fixation thermoplastique (7, 7a, 7b, 7c, 7d, 7e, 7s, 7s', 7z, 7z') s'étend de manière transversale par rapport à l'axe optique (8) de la lentille (3).

5. Système optique selon l'une des revendications 1 à 4, **caractérisé en ce que** le système optique présente un élément d'encliquetage (17) pour la réalisation d'une conjugaison de forme avec l'élément de fixation thermoplastique (7, 7a, 7b, 7c, 7d, 7e, 7s, 7s', 7z, 7z').

6. Système optique selon l'une des revendications 1 à 5, **caractérisé en ce que** deux éléments de fixation thermoplastiques mutuellement associés (7, 7a, 7b, 7c, 7d, 7e, 7s, 7s', 7z, 7z') sont présents pour la réalisation d'un raccord par conjugaison de matière entre les deux.

7. Capteur, **caractérisé en ce qu'**il comprend un système optique selon l'une des revendications 1 à 6.

8. Procédé de fixation d'une lentille (3) sur un porte-lentille (2) pour un capteur, ledit procédé comprenant les étapes consistant à :
- positionner (P) la lentille (3) dans une position relative souhaitée (15a, 15k, 15k', 15v) le long de son axe optique (8) par rapport au porte-lentille (2) ; et
- fixer la lentille (3) par rapport au porte-lentille (2) par déformation thermoplastique d'un élément de fixation thermoplastique (7, 7a, 7b, 7c, 7d, 7e, 7s, 7s', 7z, 7z'), et le système optique présentant un élément de guidage (11, 11a, 11b, 11c, 11c') permettant de guider la lentille (3) par rapport au porte-lentille (2) le long de son axe optique (8), **caractérisé en ce que** l'élément de fixation thermoplastique (7, 7a, 7b, 7c, 7d, 7e, 7s, 7s', 7z, 7z') est formé d'un seul tenant avec la lentille (3) ou le porte-lentille (2).

9. Procédé selon la revendication 8, **caractérisé en ce que** la position relative souhaitée (15a, 15k, 15k', 15v) est déterminée par la mesure répétée d'un paramètre et le repositionnement ultérieur de la lentille (3) en fonction de la valeur de paramètre mesurée.

10. Procédé selon l'une des revendications 8 ou 9, **caractérisé en ce qu'**un outil servant à la déformation thermoplastique est utilisé en même temps que le positionnement (P).
